# EUROPÄISCHE PATENTANMELDUNG

(11) **EP 2 110 010 A1**
(43) Veröffentlichungstag der Anmeldung: **21.10.2009**
(21) Anmeldenummer: 09004927.1
(22) Anmeldetag: 03.04.2009
(51) Int. Cl.: A01C 7/10, A01C 15/00

(54) **Landwirtschaftliche Verteilmaschine**

(30) Priorität: 16.04.2008 DE 102008019097
(71) Anmelder: Amazonen-Werke H. Dreyer GmbH & Co. KG, 49205 Hasbergen (DE)
(72) Erfinder: Brüggemann, Klaus, 27777 Ganderkesee (DE); Feldhaus, Werner, 27801 Dötlingen/Geveshausen (DE); Wilken, Martin, 26409 Wittmund (DE)

(57) **Zusammenfassung**

Landwirtschaftliche Verteilmaschine mit einem Vorratsbehälter (1), zugeordnetem Dosierorgan, welches das sich im Vorratsbehälter (1) befindliche Material in einstellbaren Mengen Ausbringorganen zu dosiert und zumindest einem dem Vorratsbehälter (1) zugeordneten Füllstandssensor (13). Um eine einfache Anordnung für einen Füllstandssensor (13) der bei Bedarf auch bei befülltem Vorratsbehälter (1) in einfacher Weise austauschbar ist, vorzuschlagen, sowie je nach Einsatzfahrt entsprechende Anzahlen von Füllstandsmeldern in den Vorratsbehälter (1) in einfacher weise zuordnen zu können, ist vorgesehen, dass in zumindest einer Vorratsbehälterwand (4) mehrere übereinander angeordnete Durchbrüche (5) angeordnet sind, dass zumindest in einigen der Durchbrüchen (5) diese verschließenden und eine Aussparung (8) zur Aufnahme der Füllstandssensoren (13) aufweisende stopfenähnliche Gehäuse (6) angeordnet sind.

## Beschreibung

Die Erfindung betrifft eine Verteilmaschine gemäß des Oberbegriffes des Patentanspruches 1.

Derartige landwirtschaftliche Verteilmaschinen weisen einen Vorratsbehälter auf, welchem ein Füllstandmelder zugeordnet ist. Dieser Füllstandsmelder gibt bei Erreichen der festgelegten Restmenge von auszubringendem Material im Vorratsbehälter ein Signal ab. Hierdurch soll sichergestellt werden, das Fehlstellen oder Fehlstellenbereiche auf dem Feld entstehen, an denen kein Material oder Material in unzureichender Menge ausgebracht wird. Derartige Füllstandssensoren werden bisher im Füllstandbehälter selbst angeordnet. Diese Ausbringung behindert teilweise den ungestörten Zufluss von Material zu den dem Vorratsbehälter zugeordneten Dosierorganen. Weiterhin ist von Nachteil, dass der Füllstandssensor, wenn er defekt ist, bei gefülltem Vorratsbehälter nicht in einfacher Weise ausgetauscht werden kann.

Der Erfindung liegt die Aufgabe zugrunde, eine einfache Anordnung für einen Füllstandssensor, der bei Bedarf auch bei befülltem Vorratsbehälter in einfacher Weise austauschbar ist, vorzuschlagen, sowie je nach Einsatzfall eine entsprechende Anzahl von Füllstandsmeldern dem Vorratsbehälter in einfacher Weise zuordnen zu können.

Diese Aufgabe wird in erfindungsgemäßer Weise dadurch gelöst, dass in zumindest einer Vorratsbehälterwand mehrere übereinander angeordnete Durchbrüche angeordnet sind, dass zumindest in einigen der Durchbrüchen diese verschließenden und eine Aussparung zur Aufnahme der Füllstandssensoren aufweisende stopfenähnliche Gehäuse angeordnet sind. Infolge dieser Maßnahmen sind dem Vorratsbehälter mehrere von außen auch bei gefülltem Vorratsbehälter anzuordnende Füllstandssensoren zuzuordnen.

Eine einfache Anordnung der Füllstandssensoren lässt sich in der Wandung des Vorratsbehälters dadurch verwirklichen, dass die stopfenähnlichen Gehäuse mittels einer Verschraubung in den Durchbrüchen der Vorratsbehälterwand angeordnet sind. Um zu vermeiden, dass Nässe, Material etc. in die Aussparung in dem stopfenähnlichen Gehäuse eindringen kann, sowie bei gefülltem Vorratsbehälter der Füllstandssensor ausgetauscht werden kann, ist vorgesehen, dass die Aussparung in dem stopfenähnlichen Gehäuse auf der dem Vorratsbehälterinnenraum zugewandeten Seite durch eine Wandung des Gehäuses verschlossen ist.

Das Verschließen der Aussparungen gegenüber dem Vorratsbehälter lässt sich durch die kennzeichnenden Merkmal der Patentansprüche 4 oder 5 in einfacher Weise verwirklichen.

Eine vorteilhafte Ausgestaltung der die Aussparung verschließenden Wandung, insbesondere um die Voraussetzung dazu zu schaffen, dass ein Füllstandssensor, der auf kapazitiver Basis arbeitet, eingesetzt werden kann, ist vorgesehen, dass die die Aussparung verschließende Wandung aus einem Kunststoff wie beispielsweise ein Thermoplastmaterial hergestellt ist.

Eine einfache Montage des Sensorelementen in dem stopfenähnlichen Gehäuses, das in einem in Vorratsbehälterwandung angeordneten Durchbruch angeordnet ist, lässt sich dadurch verwirklichen, dass das stopfenähnliche Gehäuse auf seiner der Vorratsbehälterwandung abgewandten Seite eine Klemmverschraubung aufweist, dass mittels dieser Klemmverschraubung der in die Aussparung des Gehäuses eingesetzte Füllstandsensor festklemmbar ist.

Weiterhin wird Elementenschutz für einen Füllstandssensor gemäß Anspruch 9 beansprucht.

Weitere Einzelheiten der Erfindung sind der Beispielsbeschreibung und den Zeichnungen zu entnehmen. Hierbei zeigen
- Fig. 1: den Vorratsbehälter in Seitenansicht mit den in der Vorratsbehälterwandung angeordneten stopfenähnlichen Gehäusen und Füllstandssensoren sowie Verschlussstopfen, sowie vergrößertem Maßstab,
- Fig. 2: die Anordnung der stopfenähnlichen Gehäuse in Durchbrüchen der Vorratsbehälterwandung in vergrößertem Maßtstab und im Schnitt und
- Fig. 3: das stoffähnliche Gehäuse mit demontierten Sensor in Seitenansicht.

Der Vorratsbehälter 1 ist in nicht dargestellter Weise auf dem Rahmen einer landwirtschaftlichen Verteilmaschine, beispielsweise einer Sämaschine oder eines Düngerstreuers angeordnet. Der Vorratsbehälter 1 ist trichterförmig ausgebildet. An dem unteren trichterförmigen Ende 2 des Vorratsbehälters 1 ist an der Flanschstelle 3 ein nicht dargestelltes Dosierorgan angeordnet, welches das sich im Vorratsbehälter 1 befindliche Material in einstellbaren Mengen in eine nicht dargestellte pneumatisch beaufschlagte Schleuse einer Förderleitung einspeist. An diese Schleuse schließt sich ein Krümmer mit Steigrohr der Förderleitung an.

An dem oberen Ende des Steigrohres ist ein nicht dargestellter Verteilerkopf angeordnet, von dem aus das dosierte Material in gleichmäßiger Weise auf an dem Verteilerkopf angeschlossene Ausbringleitungen in gleichmäßiger Weise aufgeteilt wird. Die Ausbringleitungen leiten das Material zu Ausbringelementen, beispielsweise Säscharen.

In dem unteren Bereich der trichterförmigen Wand 4 des Vorratsbehälters 1 sind untereinander mehrere Durchbrüche 5, im Ausführungsbeispiel zwei Durchbrüche 5 angeordnet. In diesen Durchbrüchen 5 ist jeweils ein stopfenähnliches Gehäuse 6 mittels einer Verschraubung 7 angeordnet. Durch dieses stopfenähnliche Gehäuse 6 werden die Durchbrüche 5 in der Wandung 4 verschlossen. Die stopfenähnlichen Gehäuse 6 sind mittels einer Verschraubung 7 in den Durchbrüchen 5 der Vorratsbehälterwand 4 abdichtend angeordnet.

In dem stopfenähnlichen Gehäuse 6 ist eine in der montierten Stellung schräg nach unten weisende Aussparung 8 in Form eines Sackloches angeordnet. Die Aussparung 8 ist auf der gegenüber dem Inneren des Vorratsbehälter 1 zugewandten Seite durch eine die Aussparung 8 verschließende Wand verschlossen, die im Ausführungsbeispiel als in der Aussparung 8 angeordneter Verschlussstopfen 10 ausgebildet ist. Es ist auch möglich, dass dieses Verschlusssteil Bestandteil des stopfenähnlichen Gehäuses ist. Im Ausführungsbeispiel ist also die Aussparung 8 als Durchgangsloch ausgebildet ist und die Aussparung 8 auf der dem Vorratsbehälter 1 zugewandten Seite 9 des stopfenähnlichen Gehäuses 6 durch einen Verschlussstopfen 10 abdichtend verschlossen ist.

Auf dem der Vorratsbehälterwand 4 abgewandten Ende 11 des stopfenähnlichen Gehäuses 6 ist eine Klemmverschraubung 12 angeordnet.

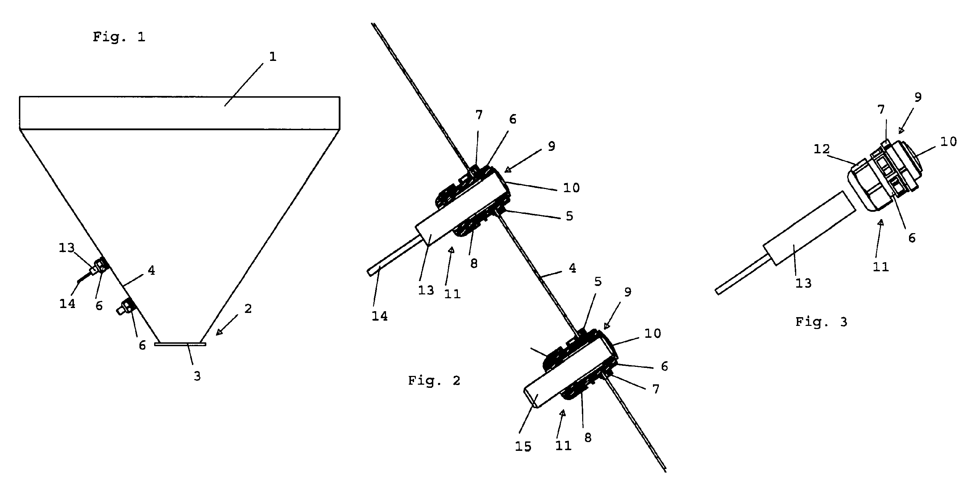

In dem oberen stopfenähnlichen Gehäuse gemäß den Fig. 1 und 2 ist ein als kapazitiver Sensor ausgebildeter Füllstandssensor 13 angeordnet. Über die Klemmverschraubung 12 lässt sich der Füllstandssensor 13, nach dem er in die Aussparung 8 des stopfenähnlichen Gehäuses 6 geschoben ist, sicher durch die Klemmwirkung der Klemmverschraubung 12 befestigen. Über die Datenteilung 14 ist der Füllstandssensor mit einem nicht dargestellten Bordrechner verbunden.

Das stopfenähnliche Gehäuse 6 und die die Aussparung 8 gegenüber dem Vorratsbehälter 1 verschließende Wandung 10 der stopfenähnlichen Gehäuses 6 ist aus einem aus Thermoplastmaterial bestehendem Kunststoffmaterial hergestellt.

Wenn stopfenähnliche Gehäuse 6 in der Wandung 4 des Vorratsbehälters 1 angeordnet sind, in denen kein Füllstandssensor 13 angeordnet sind, wird in der Aussparung 8 ein bolzenähnliches Verschlussstück 15, ein sog. Dummie angeordnet, der ebenfalls über die Klemmverschraubung 12 in der Aussparung 8 des stopfenähnlichen Gehäuses 6 gesichert ist.

Somit ist also mittels der Klemmverschraubung 12 der die in der Aussparung 8 des Gehäuses 6 eingesetzte Füllstandssensor 13 festklemmbar.

Je nach Erfordernis der Feinheit der erforderlichen Abstufung oder der je nach Materialmenge oder auszubringender Flächengröße sich bestimmende Mindestrestmenge, die im Vorratsbehälter verbleiben muss, um eine gesicherte Ausbringung des Materiales sicherzustellen, lassen sich einer und mehrere Füllstandssensoren 13 in die jeweilige Aussparung 8 des jeweiligen stopfenähnlichen Gehäuses 6 anordnen. Hierbei sind, wie bereits eingangs erwähnt, mehrere übereinander angeordnet Durchbrüche 5 in der Vorratsbehälterwandung 4 vorgesehen, denen ein stopfenähnliches Gehäuse 6 zuzuordnen ist.

## Patentansprüche

1. Landwirtschaftliche Verteilmaschine mit einem Vorratsbehälter, zugeordnetem Dosierorgan, welches das sich im Vorratsbehälter befindliche Material in einstellbaren Mengen Ausbringorganen zu dosiert und zumindest einem dem Vorratsbehälter zugeordneten Füllstandssensor, **dadurch gekennzeichnet, dass** in zumindest einer Vorratsbehälterwand (4) mehrere übereinander angeordnete Durchbrüche (5) angeordnet sind, dass zumindest in einigen der Durchbrüchen (5) diese verschließenden und eine Aussparung (8) zur Aufnahme der Füllstandssensoren (13) aufweisende stopfenähnliche Gehäuse (6) angeordnet sind.

2. Verteilmaschine nach Anspruch 1, **dadurch gekennzeichnet, dass** die stopfenähnlichen Gehäuse (6) mittels einer Verschraubung (7) in den Durchbrüchen (5) der Vorratsbehälterwand (4) angeordnet sind.

3. Verteilmaschine nach Anspruch 1, **dadurch gekennzeichnet, dass** die Aussparung in dem stopfenähnlichen Gehäuse (6) auf der dem Vorratsbehälterinnenraum zugewandeten Seite durch eine Wandung (10) des Gehäuses (6) verschlossen ist.

4. Verteilmaschine nach Anspruch 3, **dadurch gekennzeichnet, dass** die die Aussparung gegenüber dem Vorratsbehälter verschießende Wand Bestandteil des stopfenähnlichen Gehäuses ist.

5. Verteilmaschine nach Anspruch 3, **dadurch gekennzeichnet, dass** die die Aussparung (8) gegenüber dem Vorratsbehälter (1) verschießende Wandung (10) als in die Öffnung der Aussparung (8) angeordneter Verschlussstopfen (10) ausgebildet ist.

6. Verteilmaschine nach einem oder mehreren der vorstehenden Ansprüche, **dadurch gekennzeichnet, dass** die die Aussparung (8) verschließende Wandung (10) aus einem Kunststoffmaterial wie beispielsweise ein Thermoplastmaterial hergestellt ist.

7. Verteilmaschine nach einem oder mehreren der vorstehenden Ansprüche, **dadurch gekennzeichnet, dass** das stopfenähnliche Gehäuse (6) auf seiner der Vorratsbehälterwandung abgewandten Seite eine Klemmverschraubung (12) aufweist, dass mittels dieser Klemmverschraubung (12) der in die Aussparung (8) des Gehäuses (6) eingesetzte Füllstandsensor (13) festklemmbar ist.

8. Verteilmaschine nach einem oder mehreren der vorstehenden Ansprüche, **dadurch gekennzeichnet, dass** der Füllstandssensor (13) ein auf kapazitiver Basis arbeitender Sensor ist.

9. Füllstandssensor für eine Verteilmaschine nach einem oder mehreren der vorstehenden Ansprüche.
